Europäisches Patentamt

European Patent Office

Office européen des brevets

(11) Publication number: **0 316 688 B1**

# EUROPEAN PATENT SPECIFICATION

(45) Date of publication of patent specification: **30.09.92**  (51) Int. Cl.⁵: **G01N 1/22**

(21) Application number: **88118444.4**

(22) Date of filing: **04.11.88**

(54) **Gas sampling device.**

(30) Priority: **18.11.87 JP 292582/87**

(43) Date of publication of application:
**24.05.89 Bulletin 89/21**

(45) Publication of the grant of the patent:
**30.09.92 Bulletin 92/40**

(84) Designated Contracting States:
**CH DE FR GB IT LI SE**

(56) References cited:
**EP-A- 0 155 793**
**FR-A- 2 217 544**
**US-A- 3 699 814**

(73) Proprietor: **HORIBA, LTD.**
**2 Miyanohigashi-machi Kissyoin**
**Minami-ku Kyoto(JP)**

(72) Inventor: **Kohsaka, Hiroji**
**7-56, 2-chome, Nishishibukawa**
**Kusatsu City Shiga Prefecture(JP)**

(74) Representative: **TER MEER - MÜLLER - STEIN-**
**MEISTER & PARTNER**
**Artur-Ladebeck-Strasse 51**
**W-4800 Bielefeld 1(DE)**

EP 0 316 688 B1

## Description

The present invention relates to a gas sampling device use for example to measure the total quantity of exhaust substances (i.e. emissions of for example CO, $CO_2$, hydrocarbons HC, $NO_x$, particulate solids, $SO_x$ and the like) contained in the exhaust gas of an automotive vehicle.

A conventional method of measuring the total or absolute quantity of exhaust gas emissions is the so-called CVS method (Constant Volume Sampling method). However, the sampling device needed for carrying out this method has shown disadvantages in that it is expensive and has a large-size and complex construction. In particular, the bulk construction of the sampling device turned out to be a significant drawback in cases where the vehicle to be tested is a large-sized vehicle such as a truck or a bus.

Another example of a conventional gas sampling device is disclosed in Japanese Patent Laid-Open No. Sho 60-127,420. This gas sampling device is provided with a proportional divider which is formed by a plurality of pipings having an equal passage resistance and uniformly divides the flow of exhaust gas within an intermediate portion of an exhaust passage through which the exhaust gas from the engine of the vehicle is discharged. A sample probe is formed by anyone of the pipings forming the proportional divider, and an exhaust gas sample proportional to the flow rate of the exhaust gas within the exhaust gas passage is taken out by this sample probe.

In this prior art, a problem is encountered in that, for example when the exhaust gas of a Diesel engine is to be measured, particulate solids, oil mists and the like contained in the exhaust gas are adhered to the respective pipings forming the proportional divider, so that the partition ratio is changed and thus a stabilized division cannot be achieved. Further, the adherence of particulate solids, oil mists and the like to the walls of the pipings changes the quality of the exhaust gas to be measured. It is therefore difficult to measure the total quantity of the specified emissions with accuracy.

Further, a gas sampling device of the so-called ejector mode has been proposed which is adapted to suck a part of the exhaust gas by the use of an ejector, as is shown in "Motor Vehicle Technique", Vol. 40, No. 11 (1986), pp 1455 to 1466. When a sampling device of this type is used in cases where the quantity of the exhaust gas is dynamically changed, it is necessary to control the quantity of a dilution gas (for example air) in such a manner that it changes in correspondence to the change in quantity of the exhaust gas. However, a problem was encountered in that the control of the quantity of the dilution gas can only follow the changes of the quantity of the exhaust gas with a certain time-lag. It is therefore difficult to apply this sampling method to transient running conditions of the engine.

EP-A-0 155 793 discloses another conventional gas sampling device which has the features specified in the pre-characterizing part of claim 1. In this device, two venturi tubes are provided at different locations in a gas passage a smaller one of these venturi tubes is located upstream of the larger one and is provided in the interior of the gas passage, so that it functions as an ejector for sucking a portion of the gas flow through said gas passage, similar to the ejector in the prior art discussed above. The portion of the gas which has not entered into the smaller venturi tube passes through the larger venturi tube located downstream. The dilution of the sample gas is carried out in two steps. A main dilution gas passage is provided upstream of the two venturi tubes, and a secondary dilution gas passage is connected to the downstream side of the ejector. The outlet of the secondary dilution gas passage is connected to a series connection of a gas sampling passage and a constant-flow rate device. Because of the double dilution system, this conventional gas sampling device has a complicated and large-sized construction.

The present invention has been devised in view of the above described drawbacks of the prior art systems, and it is an object of the invention to provide a gas sampling device which is small-sized, inexpensive and applicable under transient running conditions of the engine.

According to the invention, this object is achieved by a gas sampling device having the features specified in claim 1.

In a gas sampling device embodying the invention the sample gas flowing through a gas passage is divided at an appointed partition ratio by means of two venturi tubes which have different sizes and are connected in parallel, and the sample gas which has flown through the smaller venturi tube is diluted in a dilution gas passage. The diluted sample gas is again divided at an appointed partition ratio by means of a constant-flow rate device and a gas sampling passage connected to the constant flow rate device in parallel with each other.

With this construction, even though the gas sampling device is small-sized, the gas to be measured can always be divided at the accurate ratio. Further, since the sample gas is divided by means of venturi tubes, the tendency of mists and the like to adhere to the walls of the flow dividing system is reduced. Due to the simple structure of the gas sampling device, the gas sampling can be achieved at low costs and maintenance of the device is facilitated.

Further improvements of the gas sampling device according to the invention are indicated in the dependent claims.

A preferred embodiment of the present invention is described below with reference to the drawings, in which

| fig. 1 | is a diagram showing the construction of a gas sampling device according to the invention; |
| --- | --- |
| figs. 2(A), (B) | are diagrams showing flow rate characteristics of venturi tubes used in the sampling device; and |
| fig. 3 | is a block diagram showing a control system. |

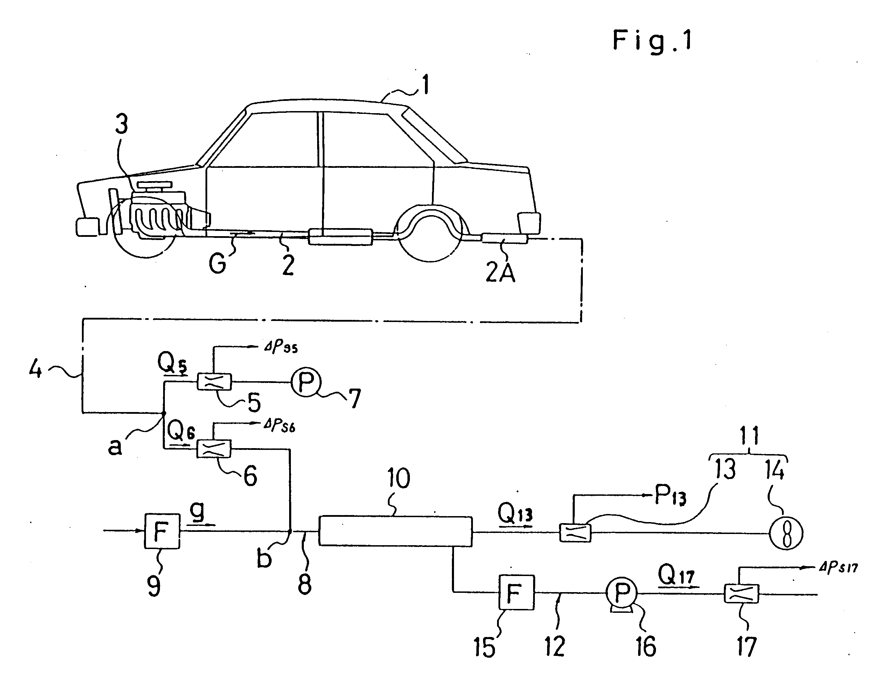

Referring to fig. 1, reference numberal 1 designates a car and reference numberal 2 designates an exhaust pipe for discharging an exhaust gas (hereinafter referred to as a sample gas) G exhausted from an engine 3 of the car 1.

Reference numeral 4 designates a gas passage connected to an exhaust port 2A of the exhaust pipe 2. Two venturi tubes 5,6 having different sizes are connected in parallel to a downstream side of the gas passage 4, and the sample gas G which has flown through the gas passage 4 is divided at an appointed partition ratio, for example 99:1, at a branching point a.

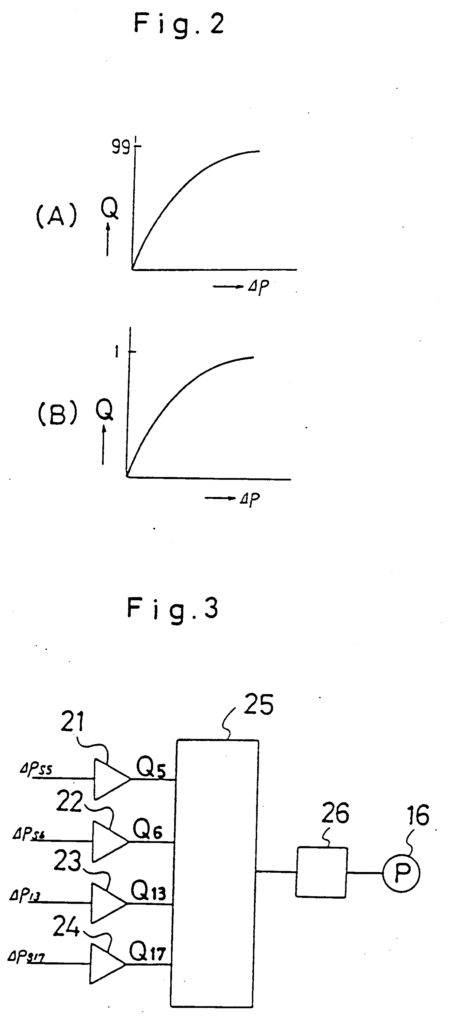

The gas flow rates $\bar{Q}_5$,$Q_6$ through the venturi tubes 5,6 are usually determined by parameters such as the venturi differential pressure, the inlet pressure, the gas temperature, the gas composition and the venturi tube sizes. According to the present invention, the structure including the venturi tubes 5,6 is so designed that, with exception of the venturi tube sizes, all parameters are the same for both venturi tubes and the characteristics of the gas flow rate Q versus the total venturi differential pressure $\Delta P$ for the two venturi tubes 5,6 have a similar shape, as is shown for example in figs. 2 (A) and 2 (B). In this context, the "total venturi differential pressure" is defined as the difference between the inlet pressure and the outlet pressure of the respective venturi tube. The venturi tube sizes (for example the throat sectional areas) are selected so that, when the diagrams shown in figs. 2(A), (B) are superposed to each other, the two curves are congruent with each other and the gas flow rate ratio $Q_5$:$Q_6$ amounts to for example 99:1.

Accordingly, the gas flow rate $Q_6$ flowing through the smaller venturi tube 6 is constantly 1/100 times the flow rate of the sample gas G through the gas passage 4. A constant-flow rate suction pump 7 is disposed on the downstream side of the venturi tube 5.

Reference numeral 8 designates a dilution gas passage disposed independently at the above described gas passage 4 and provided with a filter 9 and a dilution tunnel 10 disposed in this order in the direction of gas flow. A dilution gas flowing through the dilution gas passage is formed by air g which has passed through the filter 9.

The downstream side of the venturi tube 6 is connected to the dilution gas passage 8 at a point b between the filter 9 and the dilution tunnel 10 so that the sample gas G which has flown through the venturi tube 6 may be uniformly diluted within the dilution tunnel 10.

Reference numerals 11,12 designate a constant-flow rate device and a gas sampling passage, respectively, which are connected in parallel to the downstream end of the dilution tunnel 10 and are adapted to divide the sample gas G which has been diluted within the dilution tunnel 10 at an appointed partition ratio.

The constant-flow rate device 11 comprises for example a critical flow venturi 13 and a blower 14 connected to the downstream end thereof. The gas sampling passage 12 is provided with a particulate solid collecting filter 15, a constant-flow rate suction pump 16 and a venturi tube 17 disposed in this order in the direction of gas flow. The venturi tube sizes (for example the throat sectional areas) of the venturi tubes 13,17 are selected so that the ratio $Q_{13}$ : $Q_{17}$ of the gas flow rate $Q_{13}$ through the critical flow venturi 13 to the gas flow rate $Q_{17}$ through the venturi tube 17 amounts for example to 99:1. Accordingly, the flow rate $Q_{17}$ of the gas flowing through the venturi tube 17 (the sampling gas passage 12) is 1/100 times that of the sample gas G flowing through the dilution gas passage 8.

Fig. 3 is a block diagram showing an example of a control system for the gas sampling device having the above described construction. Referring to fig. 3, reference numerals 21,22,23,24 designate operational circuits, and reference numeral 25 designates an operating control apparatus, such as a CPU, for processing the outputs from the operational circuits 21 to 24 and outputting a control signal. Reference numeral 26 designates a controller for controlling the rotational frequency of the pump 16 on the basis of the control signal received from the CPU 25. The operational circuits 21 to 24 receive signals representing the throat differential pressure $\Delta P_{s5}$ in the venturi tube 5, the throat differential pressure $\Delta P_{s6}$ in the venturi tube 6, the inlet pressure $P_{13}$ in the venturi tube 13 and the throat differential pressure $\Delta P_{s17}$ in the venturi tube 17, respectively. These signals are used for determining the gas flow rates $Q_5$, $Q_6$, $Q_{13}$, $Q_{17}$ through the respective venturi tubes 5,6,13,17.

The operation of the gas sampling device having the above described construction will be explained below.

When the flow rates $Q_5$, $Q_6$ through the venturi

tubes 5,6 are maintained under the conditions shown in figs. 2 (A), (B), the sample gas G is divided by means of the venturi tubes 5,6 pursuant to the equation $Q_5 : Q_6 = 99:1$, and the sample gas G which has flown through the smaller venturi tube 6 is introduced into the dilution gas passage 8 to be mixed with and diluted in the air g from the filter 9 within the dilution tunnel 10. The diluted sample gas G is divided on the downstream side of the dilution tunnel 10 pursuant to the equation $Q_{13} : Q_{17} = 99:1$, and the sample gas G introduced into the gas sampling passage 12 reaches the particulate solid collecting filter 15 where the particulate solid contained in the sample gas G is collected and retained in the filter 15, so that the total quantity of particulate solid passing through the gas passage 4 can be obtained by determining the differential weight of the particulate solid collecting filter 15 before and after the sampling of the sample gas G and multiplying the differential weight by an appointed factor (10,000 in this embodiment).

However, depending on the production method and the shape of the venturi tubes 5,6, it may in certain circumstances not be possible to achieve a design in which the characteristics of the venturi tubes 5,6 are completely similar to each other. Further, these characteristics may be subtly changed due to a changes of the gas flow rate Q, so that in certain circumstances the ratio $Q_5 : Q_6$ can not be held exactly at the desired value. In such a case, the ratio $Q_{17} : Q_{13}$ is controlled by means of the pump 16 so as to change in proportion to the flow rate ratio $Q_5 : Q_6$, that is to say, the CPU shown in fig. 3 is operative to control the suction of the pump 16 so that $Q_5/Q_6 = K\, Q_{17}/Q_{13}$ (wherein K is a constant). Thus, the change of flow rate ratio at the venturi tubes 5,6 is compensated for, and the total partition accuracy is improved.

In addition, emissions other than particulate solids can be continuously measured gravimetrically by sampling a part of the sample gas G sucked by the constant flow-rate device 11 and introducing it into gas analyzers for CO, $CO_2$, HC, $NO_x$, $SO_x$ and the like. In this case, if the outputs from the analyzers are processed in view of the ratio of the flow rate $Q_5$ to the flow rate $Q_6$, a still more accurate measurement can be achieved.

## Claims

1. A gas sampling device comprising:
   - two venturi tubes (5,6) connected to a gas passage (4) through which sample gas flows,
   - dilution gas passage means (8) conducting a dilution gas and being connected to the smaller one (6) of said venturi tubes, and
   - a constant-flow rate device (11) and a gas sampling passage (12) connected to said dilution gas passage means,
   **characterized** in that
   - said venturi tubes (5,6) are connected in parallel with each other to a branching point (a) of said gas passage (4),
   - said dilution gas passage means consist of only a single dilution gas passage (8) connected to the downstream side of said smaller one of said venturi tubes, and
   - said constant-flow rate device (11) and said gas sampling passage (12) are connected in parallel with each other to said dilution gas passage (8).

2. A gas sampling device according to claim 1, wherein said venturi tubes (5,6) are so arranged and designed that the flow rate/differential pressure characteristics for both venturi tubes are substantially identical, if the scaling factors for the flow rates (Q) are set at a predetermined ratio, e.g. 99:1.

3. A gas sampling device according to claim 1 or 2, wherein the constant-flow rate device (11) and the gas sampling passage (12) are so designed that the ratio of the flow rate $(Q_{13})$ through the constant-flow rate device to the flow rate $(Q_{17})$ through the gas sampling passage (12) is substantially equal to the ratio of the flow rates $(Q_5/Q_6)$ through the venturi tubes (5,6).

4. A gas sampling device according to anyone of the claims 1 to 3, comprising a control device (25,26) for adjusting the flow rate $(Q_{17})$ through the gas sampling passage in response to the throat differential pressures $(\Delta P_{s5}, \Delta P_{s6})$ of the venturi tubes (5,6) such that the ratio $(Q_{17}/Q_{13})$ of the flow rates through the gas sampling passage and the constant flow rate device is held in constant proportion to the ratio $(Q_5/Q_6)$ of the flow rates through the venturi tubes.

5. A gas analyzer according to claim 4, wherein a suction pump (16) and another venturi tube (17) are arranged in said gas sampling passage (12), said control device (25) being responsive to the throat differential pressure $(\Delta P_{s17})$ of said other venturi tube.

6. A gas analyzer according to anyone of the preceding claims, wherein said constant-flow rate device (11) comprises a critical flow venturi (13) and a blower (14) conected to each other in series.

7. A gas sampling device according to claims 5 and 6, wherein said control device (25) is responsive to the inlet pressure ($P_{13}$) of said critical flow venturi.

8. A gas analyzer accoridng to anyone of the preceding claims, wherein a particulate solid collecting filter (15) is arranged in said gas sampling passage (12).

9. A gas sampling device according to anyone of the preceding claims, wherein a dilution tunnel (10) is provided at the downstream end of said dilution gas passage (8) and is connected to said constant-flow rate device (11) and said gas sampling passage (12).

10. A gas sampling device according to anyone of the preceding claims, wherein a constant-flow rate suction pump (7) is connected to the downstream end of the larger one (5) of the two venturi tubes (5,6).

**Patentansprüche**

1. Gasprobennahmevorrichtung mit:
   - zwei Venturirohren (5,6), die an einen von dem Probengas durchströmten Gaskanal (4) angeschlossen sind,
   - Verdünnungsgas-Leitungsmitteln (8), die ein Verdünnungsgas führen und mit dem Kleineren (6) der beiden Venturirohre verbunden sind, und
   - einer Konstantdurchsatz-Einrichtung (11) und einem Gasprobennahmekanal (12), die an die Verdünnungsgas-Leitungsmittel angeschlossen sind,
   dadurch **gekennzeichnet,** daß
   - die Venturirohre (5,6) parallel zueinander an einen Verzweigungspunkt (a) des Gaskanals (4) angeschlossen sind,
   - die Verdünnungsgas-Leitungsmittel nur aus einem einzigen Verdünnungsgaskanal (8) bestehen, der mit dem stromabwärtigen Ende des kleineren der Venturirohre verbunden ist, und
   - die Konstantdurchsatz-Einrichtung (11) und der Gasprobennahmekanal (12) parallel zueinander an den Verdünnungsgaskanal (8) angeschlossen sind.

2. Gasprobennahmevorrichtung nach Anspruch 1, bei der die Venturirohre (5,6) so angeordnet und ausgelegt sind, daß die Durchsatz/Differenzdruck-Kennlinien für beide Venturirohre im wesentlichen identisch sind, wenn die Skalierungsfaktoren für die Durchsätze (Q) in einem bestimmten Verhältnis, beispielsweise 99:1, eingestellt sind.

3. Gasprobennahmevorrichtung nach Anspruch 1 oder 2, bei der die Konstantdurchsatz-Einrichtung (11) und der Gasprobennahmekanal (12) so ausgelegt sind, daß das Verhältnis des Durchsatzes ($Q_{13}$) durch die Konstantdurchsatz-Einrichtung zu dem Durchsatz ($Q_{17}$) durch den Gasprobennahmekanal (12) im wesentlichen gleich dem Verhältnis ($Q_5/Q_6$) der Durchsätze durch die Venturirohre (5,6) ist.

4. Gasprobennahmevorrichtung nach einem der Ansprüche 1 bis 3, mit einer Steuereinrichtung (25,26) zum Einstellen des Durchsatzes ($Q_{17}$) durch den Gasprobennahmekanal in Abhängigkeit von den Engstellen-Differenzdrücken ($\Delta P_{s5},\Delta P_{s6}$) der Venturirohre (5,6) derart, daß das Verhältnis ($Q_{17}/Q_{13}$) der Durchsätze durch den Gasprobennahmekanal und die Konstantdurchsatz-Einrichtung in einem konstanten Verhältnis zu dem Verhältnis ($Q_5/Q_6$) der Durchsätze durch die Venturirohre gehalten wird.

5. Gasprobennahmevorrichtung nach Anspruch 4, bei der eine Saugpumpe (16) und ein weiteres Venturirohr (17) in dem Gasprobennahmekanal (12) angeordnet sind, wobei die Steuereinrichtung (25) auf den Engstellen-Differenzdruck - ($\Delta P_{s17}$) dieses weiteren Venturirohres anspricht.

6. Gasprobennahmevorrichtung nach einem der vorstehenden Ansprüche, bei der die Konstantdurchsatz-Einrichtung (11) ein Kritischstrom-Venturielement (13) und ein Gebläse (14) enthält, die in Serie miteinander verbunden sind.

7. Gasprobennahmevorrichtung nach Ansprüchen 5 und 6, bei der die Steuereinrichtung (25) auf den Eingangsdruck ($P_{13}$) des Kritischstrom-Venturielements anspricht.

8. Gasprobennahmevorrichtung nach einem der vorstehenden Ansprüche, bei der ein Feststoffpartikel-Sammelfilter (15) in dem Gasprobennahmekanal (12) angeordnet ist.

9. Gasprobennahmevorrichtung nach einem der vorstehenden Ansprüche, bei der ein Verdünnungstunnel (10) am stromabwärtigen Ende des Verdünnungsgaskanals (8) angeordnet und mit der Konstantdurchsatz-Einrichtung (11) und dem Gasprobennahmekanal (12) verbunden ist.

10. Gasprobennahmevorrichtung nach einem der vorstehenden Ansprüche, bei der eine Konstantdurchsatz-Saugpumpe (7) mit dem stromabwärtigen Ende des größeren (5) der beiden Venturirohre (5,6) verbunden ist.

**Revendications**

1. Dispositif de prise d'échantillons de gaz comprenant:
   - deux tubes Venturi (5, 6) reliés à un passage à gaz (4) par lequel s'écoule le gaz à échantillonner,
   - des moyens de passage de gaz de dilution (8) dirigeant un gaz de dilution et reliés au plus petit (6) des tubes Venturi,
   - un dispositif à débit constant (11) et un passage de prise d'échantillons de gaz (12) reliés audits moyens de passage de gaz de dilution,
   caractérisé en ce que
   - lesdits tubes Venturi (5, 6) sont reliés l'un à l'autre en parallèle en un point de branchement (a) dudit passage à gaz (4),
   - lesdits moyens de passage de gaz de dilution consistent seulement en un unique passage de gaz de dilution (8) relié au côté aval du plus petit desdits tubes Venturi, et
   - ledit dispositif à débit constant (11) et ledit passage de prise d'échantillons de gaz (12) sont reliés en parallèle l'un à l'autre audit passage de gaz de dilution (8).

2. Dispositif de prise d'échantillons de gaz selon la revendication 1, dans lequel lesdits tubes Venturi (5, 6) sont disposés et constitués de manière que les caractéristiques de débit/pression différentielle des deux tubes Venturi soient sensiblement identiques si les facteurs d'échelle des débits (Q) sont fixés selon un rapport prédéterminé, par exemple de 99:1.

3. Dispositif de prise d'échantillons de gaz selon la revendication 1 ou 2, dans lequel le dispositif à débit constant (11) et le passage de prise d'échantillons de gaz (12) sont constitués de manière que le rapport entre le débit ($Q_{13}$) dans le dispositif à débit constant et le débit ($Q_{17}$) dans le passage de prise d'échantillons de gaz (12) soit sensiblement égal au rapport entre tes débits ($Q_5/Q_6$) dans les tubes Venturi (5, 6).

4. Dispositif de prise d'échantillons de gaz selon l'une quelconque des revendications 1 à 3, comprenant un dispositif de commande (25, 26) pour ajuster le débit ($Q_{17}$) dans le passage de prise d'échantillons de gaz en réponse aux pressions différentielles d'étranglement ($\Delta P_{s5}$, $\Delta P_{s6}$) des tubes Venturi (5, 6) de manière que le rapport ($Q_{17}/Q_{13}$) des débits dans le passage de prise d'échantillons de gaz et le dispositif à débit constant soit maintenu selon une proportion constante avec le rapport ($Q_5/Q_6$) des débits passant par les tubes Venturi.

5. Analyseur de gaz selon la revendication 4, dans lequel une pompe d'aspiration (16) et un autre tube Venturi (17) sont montés dans ledit passage de prise d'échantillons de gaz (12), ledit dispositif de commande (25) étant sensible à la pression différentielle d'étranglement ($\Delta P_{s17}$) dudit autre tube Venturi.

6. Analyseur de gaz selon l'une quelconque des revendications précédentes, dans lequel ledit dispositif à débit constant (11) comprend un Venturi d'écoulement critique (13) et une soufflante (14) reliés l'un à l'autre en série.

7. Dispositif de prise d'échantillons de gaz selon les revendications 5 et 6, dans lequel ledit dispositif de commande (25) est sensible à la pression d'entrée ($P_{13}$) dudit Venturi à écoulement critique.

8. Analyseur de gaz selon l'une quelconque des revendications précédentes, dans lequel un filtre collecteur de particules solides (15) est monté dans ledit passage de prise d'échantillons de gaz (12).

9. Dispositif de prise d'échantillons de gaz selon l'une quelconque des revendications précédentes, dans lequel un tunnel de dilution (10) est prévu à l'extrémité d'aval dudit passage de gaz de dilution (8) et est relié audit dispositif à débit constant (11) et audit passage de prise d'échantillons de gaz (12).

10. Dispositif de prise d'échantillons de gaz selon l'une quelconque des revendications précédentes, dans lequel une pompe d'aspiration à débit constant (7) est reliée à l'extrémité d'aval du plus grand (5) des deux tubes Venturi (5, 6).

Fig.1

# Fig. 2

(A)

(B)

# Fig. 3